# DEMANDE DE BREVET EUROPEEN

(11) **EP 0 965 256 A1**
(43) Date de publication de la demande: **22.12.1999**
(21) Numéro de dépôt: 99401471.0
(22) Date de dépôt: 15.06.1999
(51) Int. Cl.: A01B 13/08, A01B 15/02

(54) **Coutre perfectionné pour sous-soleuse et sous-soleuse en comportant**

(30) Priorité: 16.06.1998 FR 9807551
(71) Demandeur: Eurogreens France, Sociéte à responsabilité limitée, 69680 Chassieu (FR)
(72) Inventeur: Bricard, Claude, 38360 Sassenage (FR)
(74) Mandataire: Hammond, William

(57) **Abrégé**

Coutre perfectionné du genre comportant une lame (1) dont le bord d'attaque (2) est un arc de cercle tournant sa concavité vers l'avant, le bord de fuite (3) rectiligne et le bord inférieur muni d'un premier renfort (4) en forme de barre de section carrée se prolongeant en avant du bord d'attaque (2) sous la forme d'une pointe effilée (5).

Le second renfort (6) disposé à l'aplomb dudit premier renfort (4), caractérisé par le fait que le second renfort (6) présente une forme d'obus dont la pointe (6a) se termine sur le bord d'attaque (2) et dont la partie arrière (6b) est prolongée par un doigt (7).

Application à la remise en état de terrain notamment de sport.

## Description

La présente invention est relative à un coutre perfectionné pour sous-soleuse ainsi qu'à une sous-soleuse en comportant.

Une sous-soleuse est un instrument agricole pour réaliser un travail profond du sol, qui agit par éclatement dans un sol sec sans retournement. Cette opération, ou sous-solage, permet d'obtenir un ameublissement profond du sol et en particulier d'aérer un sol tassé, surtout s'il comporte des zones dures ou une semelle en profondeur. Le sous-solage permet donc de redonner une structure.

Les terrains de jeux gazonnés de grande surface sont joués, tondus et roulés, ce qui provoque un compactage et par suite une asphyxie agronomique du substrat qui peut même se retrouver en état d'anaérobie.

Or il faut noter que le blocage du substrat entraîne un arrêt de la vie bactérienne et par suite une remontée du plateau racinaire.

C'est pourquoi il a déjà été proposé de redonner une structure au substrat au moyen d'une sous-soleuse telle que celle décrite dans le brevet français n° 80.22765 publié sous le numéro 2.492.621. Cette sous-soleuse comporte, sur un châssis, une pluralité de coutres solidarisés avec un équipage oscillant, articulé sur un axe transversal disposé au-dessous du châssis. Ce châssis s'étend entre une traverse frontale équipée d'un moyen de montage à l'arrière d'un tracteur, et une traverse arrière adaptée, en position de travail, à reposer sur le sol par l'intermédiaire d'un rouleau compacteur de sorte que l'équipage oscillant portant la pluralité de coutres se trouve placé en avant du rouleau compacteur tandis qu'un générateur d'oscillations est installé sur une plate-forme disposée au-dessus du châssis.

Une telle sous-soleuse peut aussi comporter une trémie de matière granuleuse adaptée à alimenter des sabots creux associés à chacun des coutres: ceci permet de garnir les saignées réalisées avec du sable ou tout autre matériau granulaire, notamment pour des terrains de faible perméabilité.

Si une telle machine donne satisfaction dans la mesure où elle permet d'atteindre les résultats tels qu'énoncés dans le document FR-2.492.621-A, il n'en reste pas moins que certains terrains présentent une structure telle qu'un simple sous-solage ne suffit pas.

En particulier, l'utilisation de nouveaux matériaux pour la réalisation de terrains de sport entraîne très souvent la nécessité de réhydrater le substrat tout en intervenant sur ce substrat.

Aussi un des buts de la présente invention est-il de fournir un coutre perfectionné pour sous-soleuse qui permet d'intervenir non seulement sur la structure du sol, mais aussi sur sa composition locale.

Un autre but de l'invention est de fournir un tel coutre qui peut s'adapter sur tout type de sous-soleuse.

Ces buts, ainsi que d'autres qui apparaîtront par la suite, sont réalisés par un coutre perfectionné du genre comportant une lame dont le bord d'attaque est un arc de cercle tournant sa concavité vers l'avant, le bord de fuite rectiligne et le bord inférieur muni d'un premier renfort en forme de barre de section carrée se prolongeant en avant du bord d'attaque sous la forme d'une pointe effilée, et qui comprend un second renfort disposé à l'aplomb du premier renfort, lequel coutre est caractérisé, selon la présente invention, par le fait que le second renfort présente une forme d'obus dont la pointe se termine sur le bord d'attaque et dont la partie arrière est prolongée par un doigt.

Avantageusement, le bord de fuite est muni d'une conduite d'alimentation débouchant au-dessus de ce doigt.

De préférence, le second renfort a un diamètre compris entre 25 et 45 mm, la partie conique ayant un angle au sommet compris entre 25 et 35 degrés.

Avantageusement, le doigt est de forme cylindrique ayant une longueur comprise entre 30 et 70 mm et un diamètre compris entre 8 et 16 mm.

La présente invention est également relative à une sous-soleuse comportant au moins un coutre tel que décrit ci-dessus. De préférence cette sous-soleuse est celle décrite dans le document FR-2.492.621-A.

La description qui va suivre, et qui ne présente aucun caractère limitatif, doit être lue en regard des figures annexées, parmi lesquelles :

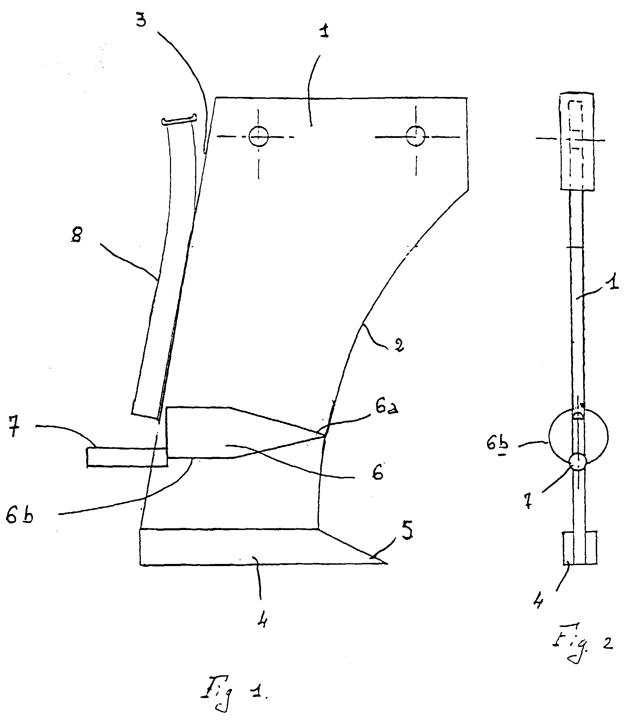

- la figure 1 est une vue de côté d'un coutre perfectionné selon la présente invention ; et
- la figure 2 est une vue arrière de ce coutre.

Ainsi qu'on peut le voir sur ces figures, un coutre perfectionné selon la présente invention est constitué par une lame 1 dont le bord d'attaque 2 est un arc de cercle dont la concavité est tournée vers l'avant, et dont le bord de fuite ou arrière, 3 est par contre rectiligne. Le bord inférieur de cette lame 1 est muni d'un premier renfort 4 de section sensiblement carrée se prolongeant en avant du bord d'attaque 2 par une pointe effilée 5.

Cette lame comporte un second renfort 6 ménagé à l'aplomb du premier renfort 4 et à une distance qui peut être de l'ordre du quart de la hauteur de ce coutre.

Selon la présente invention, ce second renfort 6 a la forme d'un obus dont la pointe conique 6a affleure le bord d'attaque 2 et dont la partie arrière 6b cylindrique se prolonge sur l'arrière par un doigt 7 qui dépasse du bord de fuite 3.

Le diamètre de la partie cylindrique 6b de l'obus 6 est compris entre 25 et 45 mm et l'angle au sommet de la pointe effilée 6a est compris entre 25 et 35 degrés.

Quant au doigt 7, il est de forme générale cylindrique: sa longueur est compris entre 30 et 70 mm et son diamètre entre 8 et 16 mm.

Ce coutre perfectionné comporte également une conduite d'alimentation 8 qui est, par exemple, rendu solidaire du bord de fuite de la lame 1 : cette solidarité peut être obtenue par soudure. Ce conduit permet d'acheminer des produits hydrorétenteurs notamment.

Lorsqu'un tel coutre perfectionné est monté sur une sous-soleuse telle que celle décrite dans le document FR-2.492.6216A, on peut mettre en place dans la cavité créée par le second renfort 6, ou obus, des produits hydrorétenteurs et/ou des engrais. Le doigt 7 a notamment pour but de fermer la fente créée à la partie inférieure de cette cavité par la lame 2 du coutre lors de l'avancement de la sous-soleuse.

## Revendications

1. Coutre perfectionné du genre comportant une lame (1) dont le bord d'attaque (2) est un arc de cercle tournant sa concavité vers l'avant, le bord de fuite (3) rectiligne et le bord inférieur muni d'un premier renfort (4) en forme de barre de section carrée se prolongeant en avant du bord d'attaque (2) sous la forme d'une pointe effilée (5), et qui comprend un second renfort (6) disposé à l'aplomb dudit premier renfort (4), caractérisé par le fait que le second renfort (6) présente une forme d'obus dont la pointe (6a) se termine sur le bord d'attaque (2) et dont la partie arrière (6b) est prolongée par un doigt (7).

2. Coutre perfectionné selon la revendication 1, caractérisé par le fait que le bord de fuite (3) est muni d'une conduite d'alimentation (8).

3. Coutre perfectionné selon les revendications 1 ou 2, caractérisé par le fait que le second renfort a un diamètre compris entre 25 et 45 mm, la pointe effilée (6a) ayant un angle au sommet compris entre 25 et 35 degrés.

4. Coutre selon la revendication 1, caractérisé par le fait que le doigt (7) est de forme cylindrique ayant une longueur compris entre 30 et 70 mm et un diamètre compris entre 8 et 16 mm.

5. Sous-soleuse munie d'au moins un coutre, caractérisée par le fait que celui-ci est un coutre perfectionné selon l'une quelconque des revendications 1 à 4.
